# EUROPEAN PATENT SPECIFICATION

(11) **EP 1 160 217 B1**
(45) Date of publication and mention of the grant of the patent: **29.09.2004**
(21) Application number: 00985809.3
(22) Date of filing: 20.12.2000
(51) Int. Cl.: C03C 27/06, C03C 27/08, E06B 3/663

(54) **PRODUCTION METHOD OF GLASS PANEL AND GLASS PANEL**
VERFAHREN ZUR HERSTELLUNG EINER GLASPLATTE UND GLASPLATTE
PROCEDE DE PRODUCTION DE PANNEAU DE VERRE ET PANNEAU DE VERRE

(30) Priority: 24.12.1999 JP 36727499; 31.10.2000 JP 2000331884
(43) Date of publication of application: 05.12.2001
(73) Proprietor: Nippon Sheet Glass Co., Ltd., Osaka-shi, Osaka 541-0041 (JP)
(72) Inventor: YOSHIZAWA, Hideo, Nippon Sheet Glass Co., Ltd., Osaka-shi, Osaka 541-0041 (JP); YASUI, Hisakazu, Nippon Sheet Glass Co., Ltd., Osaka-shi, Osaka 541-0041 (JP); KURAMOTO, Shunji, Nippon Sheet Glass Co., Ltd., Osaka-shi, Osaka 541-0041 (JP)
(74) Representative: Kaiser, Magnus, Dipl.-Phys.
(86) International application number: PCT/JP2000/009066
(87) International publication number: WO 2001/047827

(56) References cited:
- WO-A-93/15296
- WO-A1-93/15296
- FR-A- 2 774 373
- JP-A- 10 002 161
- JP-A- 11 278 877
- JP-A- 52 126 413
- US-A- 5 664 395
- DATABASE WPI Section Ch, Week 199806 Derwent Publications Ltd., London, GB; Class L01, AN 1998-063034 XP002193906 & WO 97 48650 A (NIPPON SHEET GLASS CO LTD), 24 December 1997 (1997-12-24)
- DATABASE WPI Section Ch, Week 200041 Derwent Publications Ltd., London, GB; Class L01, AN 2000-476020 XP002193907 & WO 00 41980 A (NIPPON SHEET GLASS CO LTD), 20 July 2000 (2000-07-20)
- PATENT ABSTRACTS OF JAPAN vol. 1999, no. 12, 29 October 1999 (1999-10-29) & JP 11 199279 A (ASAHI GLASS CO LTD), 27 July 1999 (1999-07-27)

## Description

### Technical Field

The present invention relates to a method of manufacturing a glass panel, including the steps of: disposing a number of spacers between a pair of glass sheets; sealing outer peripheries of the glass sheets with an outer periphery sealing portion to form a gap between the glass sheets; forming a vent in one of the glass sheets for evacuating gas from the gap; evacuating the gas in the gap via the vent to depressurize the gap; and then sealing the vent. The invention relates also to a glass panel manufactured by such method.

### Background Art

According to a typical conventional method of manufacturing a glass panel of the above-noted type, a glass tube is fixedly connected to the vent formed in one glass sheet to be communicated therewith. After evacuating gas from the gap via this glass tube, the projecting leading end of the glass tube is heated and molten to seal the vent. Therefore, in the conventional glass panel, a portion of the glass tube remains projecting at the portion of the vent.

If a portion of the glass tube remains projecting on the surface of the glass sheet as described above, this will impair the appearance of the glass panel and also the glass tube may be damaged by contact with an object, thus breaking up the depressurized condition of the gap, thereby inviting the potential for reduction in the heat insulating performance.

In view of the above, the present applicant proposed by its prior application: Japanese laid-open patent publication No. Hei. 10-198686 a method including the steps of: disposing a solder plate and a blocking plate on the top face of the glass sheet having the vent in a state of overlapping the vent; heating and melting the solder plate; allowing the molten solder plate to be cooled and solidified so as to integrate the glass sheet and the blocking plate together, thereby sealing the vent.

With this method, the projection amount of the blocking plate relative to the glass sheet surface may be minimized, thereby reducing the risk of damage in the blocking plate by contact with an object, hence, reducing also the possibility of the depressurized condition in the gap being lost.

However, in order to strongly bond the blocking plate to the glass sheet by means of the molten solder plate, it is necessary to provide in advance a metalizing treatment on the glass sheet surface. That is, a special layer needs to be formed on the glass sheet surface by means of e.g. sintering silver paste. In this respect, there still remained some room for improvement.

The present invention has been made in view of the above-described state of the art. Its object is to provide a method of manufacturing a glass panel which makes it possible to minimize the projection amount from the glass sheet surface for improved appearance and for reduced the possibility of breaking-up of the depressurized condition resulting from contact with an object and also to reliably seal the vent with a relatively easy step.

### Disclosure of the Invention

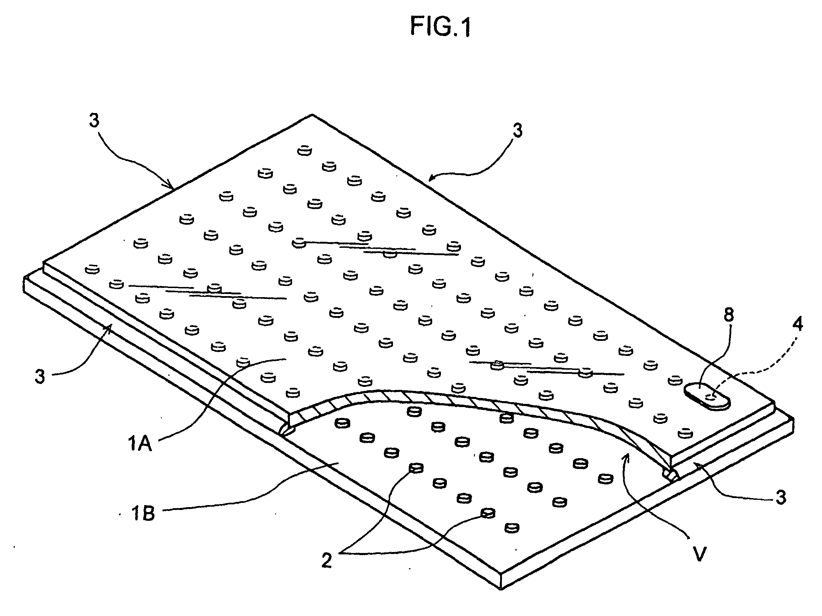

According to the characterizing feature of the invention recited in claim 1, as illustrated in Figs. 1-4, a method comprises the steps of: disposing a number of spacers 2 between a pair of glass sheets 1A, 1B; sealing outer peripheries of the glass sheets 1A, 1B with an outer periphery sealing portion 3 to form a gap V between the glass sheets 1A, 1B; forming a vent 4 in one 1A of the glass sheets 1A, 1B for evacuating gas from the gap V; evacuating the gas in the gap V via the vent 4 to depressurize the gap V; and then sealing the vent 4;
wherein at the sealing step of sealing the vent 4, a metal solder 6 is employed as a sealing material, a piece 6A of the metal solder is heated and molten adjacent the vent 4 to break open an oxide skin 6a on the surface of the metal solder 6, so that the metal solder 6 therein is allowed to flow out through the broken oxide skin to come into contact directly with the one glass sheet 1A, whereby the metal solder 6 is cooled and solidified by the contact, thus sealing the vent 4.

With the above method, a metal solder is employed as a sealing material, a piece of the metal solder is heated and molten adjacent the vent to break open an oxide skin 6a on the surface of the metal solder, so that the metal solder therein is allowed to flow out through the broken oxide skin to come into contact directly with the one glass sheet, whereby the metal solder is cooled and solidified by the contact, thus sealing the vent. Therefore, the metal solder can be directly bonded to the glass sheet without presence of the oxide skin therebetween, so that the vent can be sealed with high bonding strength.

As a result, there is no need of forming in advance a special layer or the like on the glass sheet surface and it is possible to manufacture a glass panel with minimized projection amount from the glass sheet surface for superior appearance and reduced the possibility of damage from contact with an object.

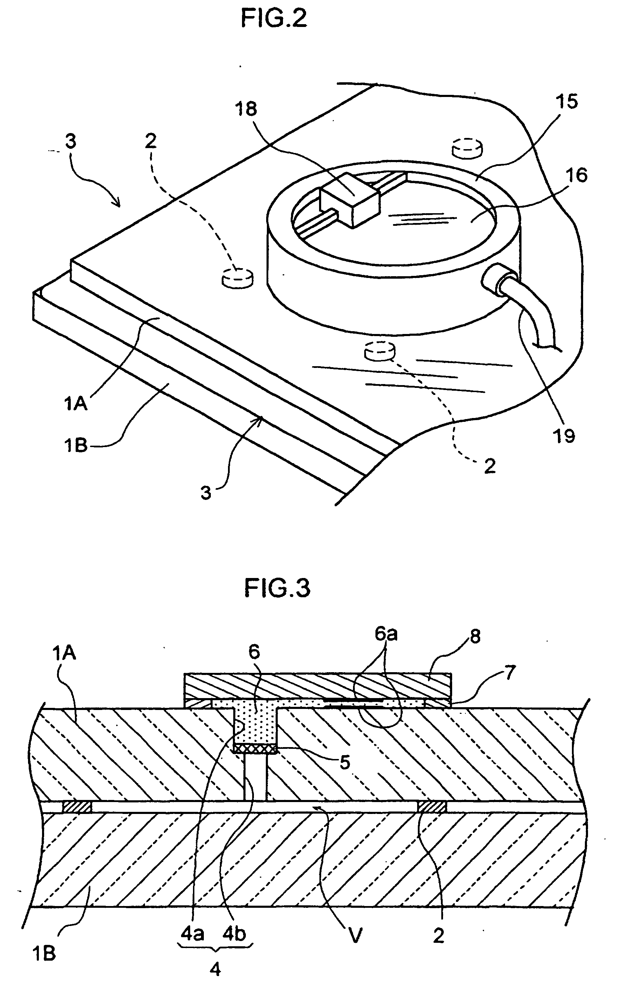

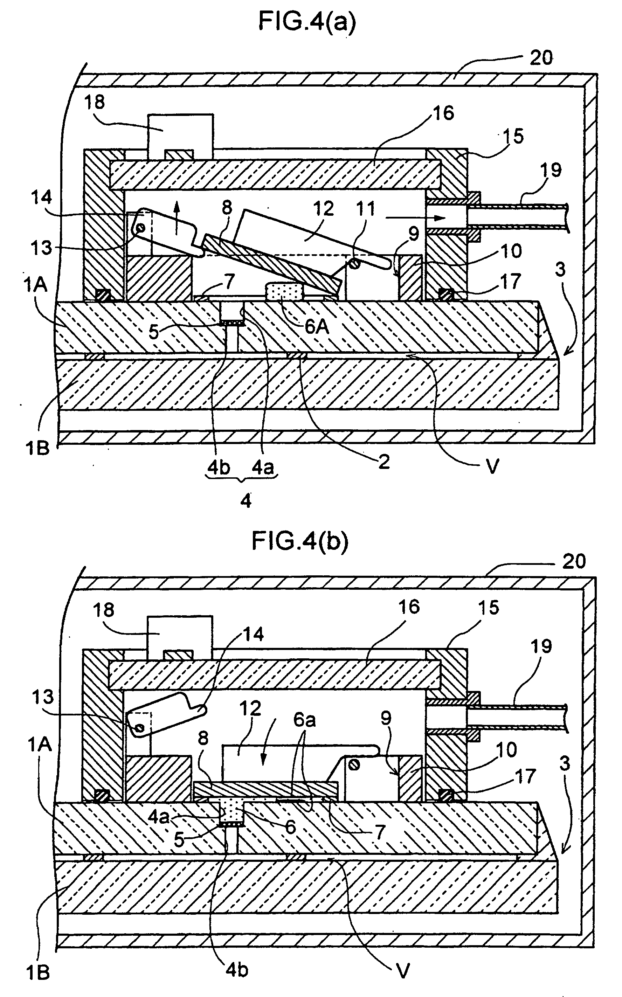

According to the characterizing feature of the invention recited in claim 2, as illustrated in Figs. 3 and 4, an inflow preventing member 5 is provided at a longitudinal intermediate portion of the vent 4 for preventing the flown-out metal solder 6 from flowing into the gap V.

Therefore, since the inflow preventing member is disposed at a longitudinal intermediate portion of the vent for preventing the flown-out metal solder from flowing into the gap, it becomes possible to reduce the projection amount of the metal solder from the glass sheet surface, in comparison with a case where such inflow preventing member is disposed on the glass sheet surface.

And, especially if the inflow preventing member is disposed at the longitudinal intermediate portion of the vent with leaving a space at an upper portion of the vent for allowing introduction of the metal solder therein, the inner content of the metal solder which has flown out through the broken oxide skin will be allowed to flow into the vent, so that vent may be sealed from its inside by the metal solder. As a result, the vent may be sealed even more reliably. Further, if the metal solder is formed substantially flush with the glass sheet surface, substantially entire content of the metal solder may be introduced into the vent as well.

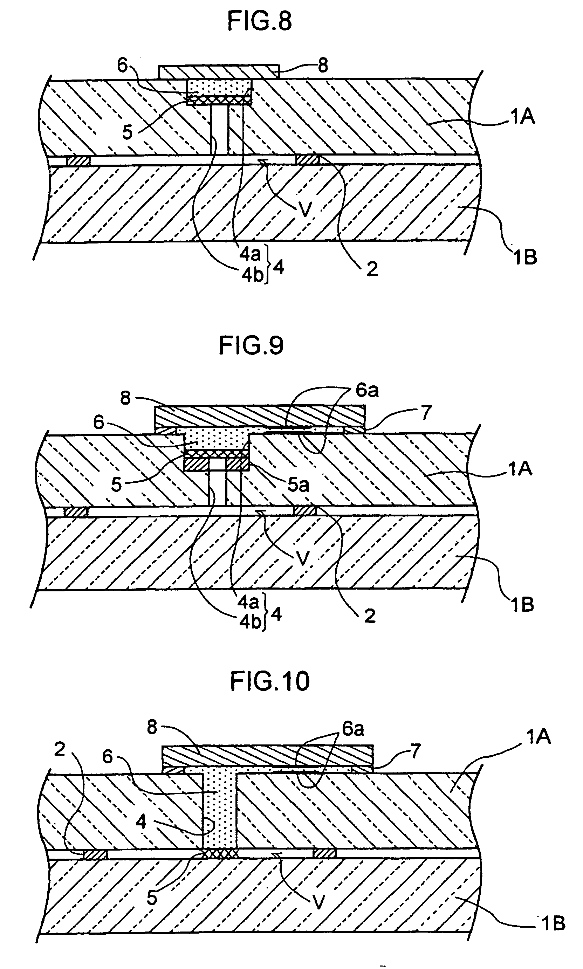

According to the characterizing feature of the present invention recited in claim 3, as illustrated in Fig. 9, the inflow preventing member 5 includes a getter 5a for adsorbing the gas in the gap V.

Therefore, since the inflow preventing member includes a getter for adsorbing the gas in the gap, even if some gas remains in the gap, this will be adsorbed by the getter, whereby the depressurized condition of the gap may be maintained even more reliably.

According to the characterizing feature of the present invention recited in claim 4, an annular restricting member 7 for restricting outflow of the metal solder 6 is provided so as to surround the vent 4 and the metal solder piece 6A, and the metal solder 6 is allowed to flow out through the oxide skin 6a on the surface of the molten metal solder piece 6A while the restricting member 7 is maintained in contact with the surface of the one glass sheet 1A.

Therefore, since an annular restricting member for restricting outflow of the metal solder is provided so as to surround the vent and the metal solder piece and the metal solder is allowed to flow out through the oxide skin on the surface of the molten metal solder piece while the restricting member is maintained in contact with the surface of the one glass sheet, the portion of the vent requiring sealing may be effectively sealed with a minimum amount of the metal solder.

According to the characterizing feature of the invention recited in claim 5, the metal solder 6 comprises indium or an alloy including indium.

Therefore, since the metal solder comprises indium or an alloy including indium, the solder can provide even higher bonding strength and even superior sealing performance, whereby the vent formed in one glass sheet may be sealed even more firmly.

According to the characterizing feature of the invention recited in claim 6, as illustrated in Figs. 1 and 3, there is provided a glass panel including a pair of glass sheets 1A, 1B disposed with a number of spacers 2 therebetween, outer peripheries of the glass sheets 1A, 1B being sealed with an outer periphery sealing portion 3 to form a gap V between the glass sheets 1A, 1B, a vent 4 being formed in one 1A of the glass sheets 1A, 1B for evacuating gas from the gap V to depressurize the gap V and then being sealed;
wherein the vent 4 is sealed by the metal solder 6 with the metal solder 6 being introduced into the vent 4.

Accordingly, since the vent defined in one of the pair of glass sheets is sealed by the metal solder and this sealing is effected with the metal solder being introduced into the vent, the vent may be sealed from the insider thereof by means of the metal solder. As a result, there may be manufactured a glass panel whose vent is sealed effectively and reliably with a minimum amount of metal solder.

According to the characterizing feature of the present invention recited in claim 7, as illustrated in Fig. 3, an inflow preventing member 5 is provided at a longitudinal intermediate portion of the vent 4 for preventing the flown-out metal solder 6 from flowing into the gap V, with the metal solder 6 being introduced up to the inflow preventing member 5.

Therefore, since an inflow preventing member is provided at a longitudinal intermediate portion of the vent for preventing the flown-out metal solder from flowing into the gap, with the metal solder being introduced up to the inflow preventing member, it is possible to provide a glass panel with its vent being sealed effectively and reliably as described above and also with the inflow of the metal solder into the vent being effectively prevented. Further, if substantially entire amount of the metal solder is allowed to flow into the vent for sealing it, there may be obtained a glass panel having the metal solder and the glass sheet surface being substantially flush with each other.

According to the characterizing feature of the present invention recited in claim 8, as illustrated in Fig. 9, the inflow preventing member 5 includes a getter 5a for adsorbing the gas in the gap V.

Therefore, since the inflow preventing member includes a getter for adsorbing the gas in the gap, even if some gas remains in the gap, this will be adsorbed by the getter, whereby there may be obtained a glass panel with the depressurized condition of the gap being maintained even more reliably.

According to the characterizing feature of the invention recited in claim 9, the metal solder 6 comprises indium or an alloy including indium.

Therefore, since the metal solder comprises indium or an alloy including indium, there may be obtained a glass panel with the solder providing even higher bonding strength and even superior sealing performance, whereby the vent formed in one glass sheet may be sealed even more firmly.

According to the characterizing feature of the invention recited in claim 10, as illustrated in Figs. 1, 13 and 14, there is provided a method of manufacturing a glass panel, the method comprising the steps of: disposing a number of spacers 2 between a pair of glass sheets 1A, 1B; sealing outer peripheries of the glass sheets 1A, 1B with an outer periphery sealing portion 3 to form a gap V between the glass sheets 1A, 1B; forming a vent 4 in one 1A of the glass sheets 1A, 1B for evacuating gas from the gap V; evacuating the gas in the gap V via the vent 4 to depressurize the gap V; and then sealing the vent 4;
wherein at the sealing step of sealing the vent 4, a metal solder 6 is employed as a sealing material, a piece 6A of the metal solder is heated and molten adjacent the vent 4 to break open an oxide skin 6a on the surface of the metal solder 6, so that the metal solder 6 therein is allowed to flow out through the broken oxide skin into the gap V to come into contact directly with a portion of the surface of the one glass sheet 1A defining the vent 4 on the side of the gap V and also with a portion of the surface of the other glass sheet 1B on the side of the gap V, the portion being in the vicinity of the vent 4, whereby the metal solder 6 is cooled and solidified by the contact to block communication between the vent 4 and the gap V, thus sealing the vent 4.

Accordingly, since the molten metal solder therein is allowed to flow out through the broken oxide skin into the gap to come into contact directly with a portion of the surface of the one glass sheet defining the vent on the side of the gap and also with a portion of the surface of the other glass sheet on the side of the gap, the portion being in the vicinity of the vent, whereby the metal solder is cooled and solidified by the contact. Thus, communication between the vent and the gap is blocked and the vent may be sealed easily. Thus, there is substantially no risk of the metal solder being damaged even if an object comes into contact with the surface of the glass sheets (glass panel). Moreover, the metal solder and the glass sheet surfaces which come into direct contact within the gap V as described above are not directly exposed to the atmosphere, whereby deterioration in the contacting portions therebetween due to corrosion or the like will hardly occur. As a result, it is possible to maintain the good contact condition between the metal solder and the glass sheet surface and to further reduce the risk of damage to the depressurized condition in the gap. Moreover, since such metal solder is caused to flow into the gap through the vent to charge the gap with this solder, by appropriately adjusting the amount of metal solder to be molten, it become readily possible also to reduce the projection amount of the metal solder from the vent on the surface of the glass sheet (glass panel).

Therefore, it is possible to manufacture a glass panel with very small projection amount from the glass sheet surface which thus is superior in appearance and which also can reduce the possibility of the depressurized condition of the gap being lost due to contact with an object.

Further, since the molten metal solder to be introduced into the gap is introduced by heating and melting the metal solder piece in the vicinity of the vent so as to allow the metal solder therein to break and flow out through the oxide skin on the surface of the molten metal solder, the molten metal solder can come into direct contact with the glass sheet surfaces without presence of oxide skin therebetween. Accordingly, the vent may be sealed with even higher bonding strength.

Therefore, there may be obtained a glass panel in which the depressurized condition of its gap can be easily maintained for an extended period of time with reliable blocking of the communication between the vent and the gap.

Incidentally, as described above, since within the gap the metal solder is charged so as to come into contact directly with a portion of the surface of the one glass sheet defining the vent on the side of the gap and also with a portion of the surface of the other glass sheet on the side of the gap, the portion being in the vicinity of the vent, to block communication between the vent and the gap, thus sealing the vent, it is possible to reliably and also easily maintain the depressurized condition of the gap, regardless of the condition of the vent per se (whether the vent per se is completely sealed or not, e.g. whether the metal solder is charged in contact with its peripheral wall or not).

According to the characterizing feature of the present invention recited in claim 11, the portions of the glass sheets on the side of the gap coming into direct contact with the metal solder are formed in advance into smooth faces.

Accordingly, since the portions of the glass sheets coming into direct contact with the metal solder are formed in advance into smooth faces, the wettability of the molten metal solder introduced into the gap relative to these portions of the glass sheet surfaces is improved. Therefore, the contact condition between the glass sheet surfaces and the metal solder refilled inside the gap may be even closer to each other.

Consequently, the above-described contact condition between the glass sheet surfaces and the metal solder refilled inside the gap may be even tighter, so that the communication between the vent and the gap may be blocked in even more reliable manner for sealing the vent.

According to the characterizing feature of the present invention recited in claim 12, the metal solder comprises indium or an alloy including indium.

Therefore, since the metal solder comprises indium or an alloy including indium, the solder can provide even higher bonding strength and even superior sealing performance, whereby the vent formed in one glass sheet may be sealed even more firmly.

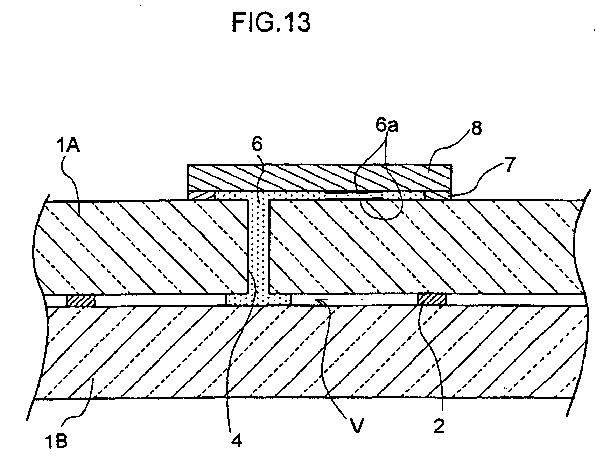

According to the characterizing feature of the invention recited in claim 13, as illustrated in Figs. 1 and 13, there is provided a glass panel including a pair of glass sheets 1A, 1B disposed with a number of spacers 2 therebetween, outer peripheries of the glass sheets 1A, 1B being sealed with an outer periphery sealing portion 3 to form a gap V between the glass sheets 1A, 1B, a vent 4 being formed in one 1A of the glass sheets 1A, 1B for evacuating gas from the gap V to depressurize the gap V and then being sealed;
wherein a metal solder 6 is charged within the gap V in such a manner as to come into direct contact with a portion of the surface of the one glass sheet 1A defining the vent 4 on the side of the gap V, the portion being around the vent 4. and also with a portion of the surface of the other glass sheet 1B on the side of the gap V, the portion being in the vicinity of the vent 4, thereby to block communication between the vent 4 and the gap V, thus sealing the vent 4.

Accordingly, since a metal solder is charged within the gap in such a manner as to come into direct contact with a portion of the surface of the one glass sheet defining the vent on the side of the gap, the portion being around the vent, and also with a portion of the surface of the other glass sheet on the side of the gap, the portion being in the vicinity of the vent, thereby to block communication between the vent and the gap, thus sealing the vent, there may be provided a glass panel glass panel with minimized projection amount from the glass sheet surface for superior appearance and reduced possibility of damage from contact with an object. Moreover, the vent may be sealed effectively and reliably with further reduced amount of metal solder.

According to the characterizing feature of the present invention recited in claim 14, the metal solder comprises indium or an alloy including indium.

Therefore, since the metal solder comprises indium or an alloy including indium, the solder can provide even higher bonding strength and even superior sealing performance, whereby the vent formed in one glass sheet may be sealed even more firmly.

Incidentally, although reference marks are provided in the above description in order to facilitate reference to the accompanying drawings, it is understood that the provision of the marks is not to limit the scope of the present invention to the constructions shown in the accompanying drawings.

### Brief Description of the Drawings

Fig. 1 is a partially cutaway perspective view of a glass panel,
Fig. 2 is a perspective view of a glass panel and a sealing device,
Fig. 3 is a section view of principal portions of a glass panel according to a first embodiment,
Fig. 4 is a section view illustrating a sealing operation of a vent according to the first embodiment,
Fig. 5 is a section view of principal portions of a glass panel according to a further embodiment,
Fig. 6 is a section view of principal portions of a glass panel according to a further embodiment,
Fig. 7 is a section view of principal portions of a glass panel according to a further embodiment,
Fig. 8 is a section view of principal portions of a glass panel according to a further embodiment,
Fig. 9 is a section view of principal portions of a glass panel according to a further embodiment,
Fig. 10 is a section view of principal portions of a glass panel according to a further embodiment,
Fig. 11 is a section view showing a further embodiment of a sealing device,
Fig. 12 is a section view showing a still further embodiment of a sealing device,
Fig. 13 is a section view of principal portions of a glass panel according to a second embodiment,
Fig. 14 is a section view illustrating a sealing operation of a vent according to the second embodiment,
Fig. 15 is a section view of principal portions of a glass panel according to a further embodiment,
Fig. 16 is a section view of principal portions of a glass panel according to a further embodiment,
Fig. 17 is a section view of principal portions of a glass panel according to a further embodiment, and
Fig. 18 is a section view showing a further embodiment of the sealing device.

### Best Mode of Embodying the Invention

A first embodiment of a method of manufacturing a glass panel and the glass panel manufactured by the method relating to the present invention will be described with reference to the accompanying drawings.

### (first embodiment)

A glass panel shown in Fig. 1 includes a pair of glass sheets 1A, 1B disposed with a number of spacers 2 interposed to form a gap V between the glass sheets 1A, 1B, with outer peripheries of the glass sheets 1A, 1B being sealed together by an outer periphery sealing portion 3.

The gap V is maintained under a depressurized condition of e.g. 1.33 Pa (corresponding to 1.0 x 10⁻² Torr) or lower. For this purpose, a vent 4 for evacuation is formed in one glass sheet 1A and this vent 4 is sealed after the evacuation operation.

Each of the glass sheets 1A, 1B employed in this glass panel is a float glass sheet having a thickness of about 2.65 mm to 3.2 mm. However, other various kinds of sheet glass such as figured glass sheet, frosted glass sheet, wire glass sheet, tempered glass sheet, a glass sheet capable of absorbing thermic rays or ultraviolet rays may be employed instead. Further, the thickness of the glass sheet too may be appropriately selected, depending on the type of the glass used.

Further, the two glass sheets 1A, 1B need not be of a same type and a same thickness. Glass sheets of different types and/or different thickness may be employed also.

Preferably, the spacer 2 is made of a material such as stainless steel (SUS304) having a compression strength of 4.9 x 10⁸ Pa (corresponding to 5t/cm²) or more and in the form of a cylinder having a diameter of 0.3 mm to 1.0 mm and a thickness of 0.15 mm to 1.0 mm. Also preferably, the distance between the spacers 2 is about 20 mm.

However, the material of the spacer 2 is not particularly limited to the stainless steel. Instead, the spacer 2 may be formed of other various kinds of material such as other kinds of metal material like Inconel 718 alloy, quartz glass, ceramic etc. Its shape is also not limited to the cylinder, but may be a square pillar, etc. The distance between the spacers 2 also can be varied appropriately.

The outer periphery sealing portion 3 is formed of a low-melting glass such as solder glass and is capable of sealing the outer peripheral edges of the two glass sheets 1A, 1B together so as to maintain the sealed condition of the gap V inside.

Incidentally, of the two glass sheets 1A, 1B, one glass sheet 1A is slightly smaller in area than the other glass sheet 1B, so that the outer peripheral edge of the other glass 1B projects beyond the outer peripheral edge of the one glass sheet 1A. Accordingly, in forming the outer periphery sealing portion 3, the sealing material such as solder glass may be disposed on this projecting portion for allowing the sealing operation of the gap V by the outer periphery sealing portion 3 to take place in an efficient and reliable manner.

The vent 4, as shown in Fig. 3 in details, is a stepped vent consisting of a large-diameter hole 4a of a diameter of 3 mm and a small-diameter hole 4b of a diameter of 2 mm. On its stepped portion, an inflow preventing member 5 for preventing metal solder 6 from flowing into the gap V can be disposed. In this manner, the vent 4 is to be sealed with the metal solder 6 with the inflow preventing member 5 being set on the stepped portion between the large-diameter hole 4a and the small-diameter hole 4b. Further, on the surface of the glass sheet 1A, there is affixed a guide plate 7 as an annular restricting member and this guide plate 7 and the metal solder 6 are covered together with a cover member 8.

The inflow preventing member 5 is made of a metal mesh using a thin stainless steel wire having a wire diameter of 0.04 mm and an opening area percentage of 36.8%. However, this may be made of any other material such as glass fabric as long as such other material does not interfere with the evacuation operation from the vent 4 and yet prevents inflow of the metal solder 6.

Preferably, with consideration to the temperature (-30°C∼100°C) during use of the glass panel, the metal solder 6 should have a melting point of 120°C∼250°C. For instance, indium having a melting point of 156.4°C may be employed. Indium has a strong bonding force relative to glass and also provides superior sealing performance. Moreover, the oxide skin formed on its surface is thin. For these reasons, indium is preferred as the metal solder 6 employed in this invention.

However, since indium is a relatively expensive metal material, various alloys thereof such as an alloy of 50% of indium and 50% of tin (having the solidus at 115.6°C and the liquidus at 126.9°C) or alloy of 40% of indium and 60% of lead (having the solidus at 173.0°C and the liquidus at 225.0°C).

Incidentally, the use of indium or indium alloy as the metal solder 6 provides a further advantage as follows. That is, due to the difference in the coefficients of linear expansion between the metal solder 6 and the glass sheets 1A, 1B, even if a stress is developed in the bonding interface between the metal solder 6 and the glass sheets 1A, ,1B resulting from variation in the atmospheric temperature after the metal solder 6 was placed into direct contact with the glass sheets 1A, 1B and solidified, indium or indium alloy, because of its softness, can relieve such stress, thereby to reduce the possibility of detachment of the metal solder 6. Therefore, it can be expected that the depressurized condition of the gap will be maintained stably for an extended period of time.

The guide plate 7 is provided for the purpose of restricting flow of the metal solder 6. Therefore, this can be formed of any material as long as it can prevent flow of the metal solder 6. However, since it is preferred that the material should easily adsorb occluded gas on the surface in vacuum, a porous material is not suitable. Most preferably, the guide plate should be a metal or ceramic plate or stainless steel mesh having a thickness of 0.1 mm approximately.

The cover member 8 too may be formed of various kinds of material. However, since it is preferred that the material should provide a strong bending force relative to the metal solder 6 and should also have a similar coefficient of thermal expansion to that of the glass sheets 1A, 1B constituting the glass panel, this cover member should preferably comprise a glass sheet of same composition as the glass sheets 1A, 1B.

Next, a sealing device used for sealing the vent 4 with the metal solder 6 will be explained.

This sealing device, as shown in Figs. 2 and 4, includes a stand 10 defining a through hole 9 at the center thereof, the through hole 9 having a rectangular shape in its plan view. First, on the stand 10, there are mounted a horizontal axis 11 for weight and a weight 12 pivotable about the horizontal axis 11. Further, on this stand 10, there are also mounted a horizontal axis 13 for a pivot and a pivot member 14 pivotable about the horizontal axis 13.

The weight 12 and the pivot member 14 are disposed in opposition to each other across the through hole 9 of the stand 10. Of these stand 10, weight 12 and pivot member 14, only the pivot member 14 is made of magnetic material such as iron and the other components, i.e. the stand 10 and the weight 12 are made of non-magnetic material.

The components of the sealing device such as the stand 10 can be accommodated within a cylindrical barrel 15 made of e.g. non-magnetic material. The upper face of the barrel 15 is sealed with a glass sheet 16 and to the bottom face of the barrel 15, there is attached an O-ring 17 for providing sealing relative to the glass sheet 1A.

In the area of the upper face of the glass sheet 16 and at a position above the free end of the pivot member 14, an electromagnet 18 is provided. Further, the barrel 15 includes a flexible pipe 19 for evacuating gas from the gap V of the glass panel via the inner space of the barrel 15.

Next, a method of manufacturing a glass panel by sealing the vent 4 by using this sealing device will be described.

First, as shown in Fig. 4 (a), the inflow preventing member 5 is inserted in advance into the large-diameter hole 4a of the vent 4. Then, the stand 10 is mounted on the glass sheet 1A In doing this, the stand 10 is to be mounted so that the vent 4 is located within the through hole 9 of the stand 10.

In the area on the glass sheet 1A surrounded by the through hole 9 of the stand 10, the guide plate 7 is placed with a metal solder piece 6A being attached to the inner side of the guide plate 7. That is, the guide plate 7 is to be mounted on the glass sheet 1A so that the vent 4 and the metal solder piece 6A are surrounded by the annular guide plate 7.

The distance between the disposing position of the metal solder piece 6A and the vent 4 is appropriately set, depending on e.g. a kind and amount of the metal solder piece 6A used. For example, if the vent 4 has a pore diameter of 2 mm and the gap V has a layer thickness of 0.2 mm, then, by using about 0.3 g of the metal solder piece 6A formed solely of indium and by setting the distance between the disposing position of the metal solder piece 6A and the vent 4 to 8 mm approximately, the solder may be uniformly charged within the gap V.

Then, the cover member 8 is mounted so that one side of this cover member 8 is engaged with one end of the guide plate 7 and the other side of the cover member 8 is engaged with the upper face of the free end of the pivot member 14 and also the weight 12 is placed on the upper face of the cover member 8. Next, the barrel 15 is placed over this, so that the stand 10, the metal solder piece 6A and the cover member 8 together are accommodated within the barrel 15.

Then, this glass panel and the sealing device will be charged into a heating furnace 20 with the glass panel being maintained horizontal. Then, as they are heated to e.g. 200°C, evacuation operation is effected through the flexible pipe 19. Whereby, air in the barrel 15 is withdrawn and air at the gap V is also withdrawn through the inflow preventing member 5 formed of e.g. a metal mesh of a stainless steel wire, so that the predetermined depressurized condition described hereinbefore is obtained inside the gap V.

Indium forming the metal solder piece 6A will be melted when the temperature becomes higher than 156.4°C. However, with the above-described temperature condition alone, its original shape before the heating operation may be substantially maintained by the surface tension. Incidentally, even if the metal solder piece 6A is activated by its melting, promotion of oxidation on the surface of the metal solder piece 6A may be prevented since the inside of the barrel 15 is near vacuum.

When the metal solder piece 6A has been melted and the condition in the gap V has reached the predetermined condition, power is supplied to the electromagnet 18. With this, by the attraction exerted by the electromagnet 18, the pivot member 14 is pivoted upward around the pivot horizontal axis 13 to release the engagement with the cover member 8.

Then, by the cooperative action of the weight of the cover member 8 and the weight of the weight 12, the cover member 8 will be dropped onto the molten metal solder piece 6A. By this dropping of the cover member 8, the molten metal solder piece 6A will be collapsed instantaneously. That is, as illustrated in Fig. 4 (b), the oxide skin 6a on the surface will be broken to allow the inner content of the metal solder piece 6A to flow out or spill out.

Although this spilt content of the metal solder piece 6A flows while directly contacting the glass sheet 1A, its spilling-out area will be restricted substantially within the guide plate 7. Then, the spilt content of the metal solder piece 6a will flow into the vent 4 to come into direct contact with the outer peripheral face of the vent 4. In the course of this, however, its inflow into the vent V is prevented by the inflow preventing member 5.

Under this condition, the heating by the heating furnace 20 is stopped and it is waited until it is cooled. Then, the molten metal solder piece 6A will have been solidified to complete sealing of the vent 4 with this metal solder 6. Thereafter, if necessary, a water-proof sealant such as silicone will be applied or a cap will be attached to the vent, whereby the manufacture of the glass panel is completed.

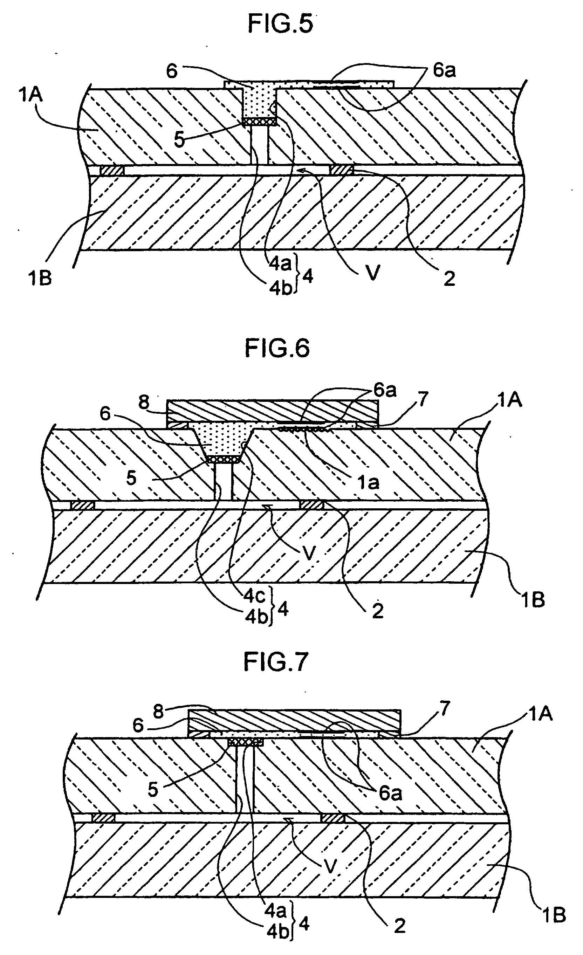

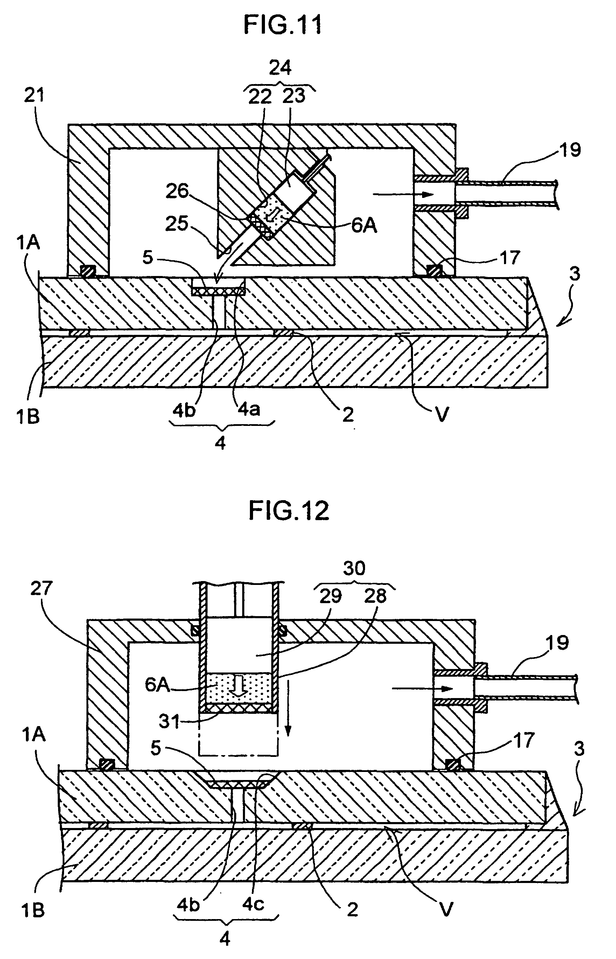

Next, other embodiments closely relating to the first embodiment will be described.
<1-1> In the case of the finished glass panel described in the foregoing first embodiment, the guide plate 7 is affixed to the periphery of the vent 4 sealed with the metal solder 6 and the cover member 8 covers this guide plate 7 and the metal solder 6. However, as shown in Fig. 5, the glass panel may be constructed without the guide plate 7 or the cover member 8.
   For this glass panel of Fig. 5 too, the same sealing device as that described in the foregoing embodiment is employed for sealing the vent 4 by entirely same method. Thereafter, however, the guide plate 7 and the cover member 8 are removed to leave only the metal solder 6 fixedly bonded to the inside of the vent 4 and to the periphery thereof. Accordingly, it is preferred that the guide plate 7 and the cover member 8 should be formed of a material, such as aluminum, which hardly adheres to the solidified metal solder 6. Also, since the metal solder 6 is exposed in the final condition, it is preferred that a water-proof coating should be applied or a cap should be affixed for protection.
<1-2> In the foregoing embodiment, the vent 4 is constructed as a stepped vent consisting of the large-diameter hole 4a and the small-diameter hole 4b. However, as shown in Fig. 6, the vent 4 may comprise a combination of a trumpet-like large-diameter hole 4a having a diameter increasing upward and the small-diameter hole 4b.
   Further, as shown in this Fig. 6, a fine uneven face 1a may be formed in advance at the portion of the surface of the glass sheet 1A where the metal solder piece 6A is to be placed. Then, the metal solder piece 6A may be placed on this uneven face 1a. In this case, when the content of the metal solder piece 6A spills out, the oxide skin 6a of the metal solder piece 6a will be hooked by the uneven face 1a, so that the oxide skin will be prevented from entering the vent 4. As a result, the introduction of the content of the metal solder piece 6A into the vent 4 can take place more smoothly, whereby more reliable sealing of the vent 4 can be achieved.
<1-3> In the foregoing embodiment, the inflow preventing member 5 is disposed at a longitudinal mid position of the vent 4, so that the metal solder piece 6A flows out to seal a part of the upper portion of the vent 4. Instead, as shown in Fig. 7, the inflow preventing member 5 may be disposed at the upper end of the vent 4. Then, when the metal solder plate 6A flows out, the metal solder 6 will cover and seal the top of the vent 4, not sealing the inside of the vent 4.
   That is, in this case, the vent 4 will comprise a combination of the small-diameter hole 4b and a large-diameter hole 4a having a depth equal to the thickness of the inflow preventing member 5. Then, by disposing the inflow preventing member 5 inside this large-diameter hole 4a, and if the metal solder 6 is allowed to flow out in this condition, the metal solder 6 will not flow into the vent 4, but come into direct contact only with the surface of the glass sheet 1A to seal the vent 4 and this metal solder 6 will be covered with the cover member 8. Further, in this embodiment shown in Fig. 7, if the guide plate 7 and the cover member 8 are removed after solidification of the metal solder 6, there will be obtained a glass panel without the guide plate 7 or the cover member 8.
<1-4> When the vent 4 is constructed as a stepped vent consisting of the large-diameter hole 4a, 4c and the small-diameter hole 4b, as shown in Fig. 8, the inflow preventing member 5 may be inserted in advance into the large-diameter hole 4a, so that the introduced metal solder 6 will be present only inside the large-diameter hole 4a. In this case, as shown in Fig. 8 in particular, by controlling the amount of metal solder 6, it is also possible to form this metal solder 6 and the surface of the glass sheet 1A substantially flush with each other. Also, if necessary, the metal solder 6 may be covered by the cover member 8.
   However, in order to carry out such outflow operation smoothly, a sealing device to be described later (see Fig. 11 and Fig. 12) may be used effectively.
<1-5> In the foregoing embodiment, the inflow preventing member 5 formed of a wire mesh using a stainless steel wire or glass cloth is employed alone. Instead, as shown in Fig. 9, a further embodiment is possible in which the inflow preventing member 5 includes a getter 5a.
   This getter 5a is provided for adsorbing gas present in the gap V. And, this is made of Zr, Zr-Al, Zr-Al-Ti, Zr-V-Fe, Ba-Al, etc. And, this getter 5a is formed cylindrical to be inserted into the large-diameter hole 4a, so that one side of the getter 5a is exposed inside the gap V.
   Incidentally, regarding this getter 5a, in addition to its construction shown in Fig. 9, it is also possible to cause it to be retained by the inflow preventing member 5, i.e. to cause the getter to be retained by the face of the inflow preventing member 5 exposed to the gap V.
<1-6> In the foregoing embodiment, the vent 4 is constructed as a stepped vent. Instead, as shown in Fig. 10, the vent 4 may be constructed as a straight hole.
   In this case, if it is necessary to prevent the molten metal solder piece 6A from flowing into the gap V, as shown, the inflow preventing member 5 may be pinched between the two glass sheets 1A, 1B. Still alternatively, the inflow preventing member 5 may be affixed to a longitudinal intermediate portion of the straight vent 4 so as to prevent the metal solder piece 6A from flowing into the gap V.
   Further, in this embodiment shown in Fig. 10 also, the glass panel may be formed without the guide plate 7 or the cover member 8.
<1-7> Moreover, the construction of the sealing device used for sealing the vent 4 with the metal solder 6 is not limited to that described in the foregoing embodiment. Instead, various other constructions can be employed also.
   For instance, a sealing device shown in Fig. 11 includes a gas-tight box-like member 21 having a flexible pipe 19 for evacuating gas from the inside of the gap V and an O-ring 17 for providing sealing relative to the glass sheet 1A. Inside this box-like member 21, there is mounted an injector 24 consisting essentially of an inner cylindrical portion 22 and a slider 21 slidably disposed inside the cylindrical portion 22. The cylindrical portion 22 of the injector 24 is communicated with an inlet hole 25. Further, inside the cylindrical portion 22, there is incorporated a filter 26 formed of a stainless steel.
   When this sealing device is used, the box-like member 21 will be set so as to cause the inlet hole 25 to face the vent 4 and then the metal solder piece 6A will be inserted into the cylindrical portion 22. Thereafter, the injector 24 is heated to melt the metal solder piece 6A inside the cylindrical portion 22.
   Then, as the slider 23 is slid to inject the molten metal solder 6 from the injection hole 25 into the vent 4, only the content of the metal solder piece 6A will be injected into the vent 4. That is, the oxide skin 6a mixed in the molten metal solder 6 will be blocked by the filter 26, thus preventing the oxide skin 6a from flowing into the injection hole 25 to block this hole 25.
   Accordingly, like the sealing device of the foregoing embodiment, after cooling, the molten metal solder piece 6A will be solidified, whereby the sealing of the vent 4 with the metal solder 6 will be completed. The landing position of the metal solder piece 6A spilling over from the injection hole 25 of the injector 24 can be controlled by appropriately setting such factors as the orientation of the injection hole 24, its length and its inner diameter, the forcing speed of the slider 23, the fluidity of the metal solder 6.
<1-8> Further, a sealing device shown in Fig. 12, like the sealing device shown in Fig. 11, includes a gas-tight box-like member 27 having a flexible pipe 19 and an O-ring 17. Inside the box-like member 27, there is mounted an injector 30 consisting essentially of a cylindrical portion 28 and a slider 29. The cylindrical portion 28 of the injector 30 incorporates therein a filter 31. The injector 30 is vertically slidable with maintaining the sealed condition relative to the box-like member 27.
   Accordingly, with this sealing device, first, the box-like member 27 is set so that the opening of the cylindrical portion 28 will be located above the vent 4. Then, the injector 24 is heated to melt the metal solder piece 6A inserted into the cylindrical portion 22. Alternatively, simultaneously with the melting operation, the entire injector 30 is slid downward to cause the leading end of the cylindrical portion 28 to face the vent 4.
   Then, as the slider 29 is pressed down with the cylindrical portion 28 being fixed, the molten metal solder 6 will be injected into the vent 4.
   The spilling of the oxide skin 6a from the cylindrical portion 28 will be prevented by the filter 31, so that only the content of the metal solder piece 6A will be injected into the vent 4. The molten metal solder piece 6A will be solidified after the subsequent cooling, whereby the sealing of the vent 4 with the metal solder 6 will be completed.
   Next, a method of manufacturing a glass panel and the glass panel manufactured by the method according to a second embodiment of the present invention will be described with reference to the accompanying drawings.

### (second embodiment)

In this embodiment, the appearance of the finished glass panel (see Fig. 1), the depressurized condition inside the gap V, the construction of the glass sheets 1A, 1B employed, the construction and arrangement of the spacers 2 per se, the construction of the outer periphery sealing portion 3, the composition of the metal solder 6, the construction of the guide plate 7 and the construction of the cover member 8 are not particularly different from those of the first embodiment. Therefore, detailed discussion thereof will be omitted.

Incidentally, this embodiment is same as the first embodiment also in that one glass sheet 1A of the pair of glass sheets 1A, 1B is formed slightly smaller in area than the other glass sheet 1B for allowing the sealing operation of the gap V by the outer periphery sealing portion 3 to take place in an efficient and reliable manner. The following discussion will focus mainly on those respects that the second embodiment differs from the first embodiment.

The vent 4, as shown in Fig. 13 in details, comprises a vent having a diameter of 2 mm. This vent 4 is sealed as the metal solder 6 charged into direct contact with the portion of the sheet face of the glass sheet 1A on the side of the gap V and in the periphery of the vent 4 and with the portion of the sheet face of the other glass sheet 1B on the side of the gap V and in the vicinity of the vent 4 blocks communication between the vent 4 and the gap V. Further, on the surface of the glass sheet 1A, there is affixed the guide plate 7 as an annular restricting member, and this guide plate 7 and the metal solder 6 are covered by the cover member 8.

Next, there will be described a method of manufacturing the glass panel with sealing the vent 4 by using the same sealing device as the first embodiment.

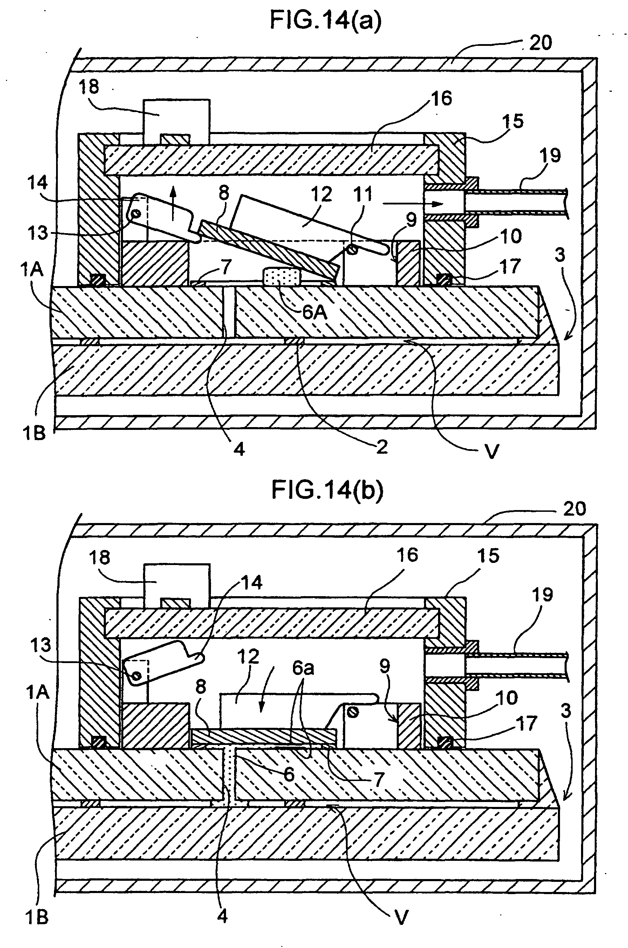

First, as illustrated in Fig. 14 (a), the glass panel is placed with the sheet faces of the glass sheets 1A, 1B being substantially horizontal, and the stand 10 is mounted on the glass sheet 1A having the vent 4. This mounting operation is effected such that the vent 4 is disposed within the through hole 9 of the stand 10.

Next, in the area on the glass sheet 1A surrounded by the through hole 9 of the stand 10, the guide plate 7 is placed, with the metal solder piece 6A being attached to the inner side of this guide plate 7. That is, the guide plate 7 is placed on the glass sheet 1A such that the annular guide plate 7 surrounds the vent 4 and the metal solder piece 6A The subsequent steps may be entirely the same as those of the first embodiment.

The flowed-out content of the metal solder piece 6A will flow over the surface of the glass sheet 1A. However, its outflow range is limited substantially within the guide plate 7, so that the flowed-out content of the metal solder piece 6A will flow into the vent 4 and further flow through this vent 4 into the gap V to come into direct contact with the portion of the sheet face of the glass sheet 1A having the vent 4 on the side of the gap V and in the periphery of the vent 4 and the portion of the sheet face of the other glass sheet 1B also on the side of the gap V and in the vicinity of the vent 4.

Under this condition, the heating by the heating furnace 20 is stopped and the cooling is waited to allow the molten metal solder piece 6A to be solidified. As a result, the metal solder 6 charged into the gap V with the solder directly contacting the sheet faces of the glass sheets 1A, 1B on the side of the gap V blocks the communication between the vent 4 and the gap V, whereby the sealing of the vent 4 is completed. Thereafter, if necessary, a water-proof sealant such as silicone may be applied to the vent 4 or a cap is affixed thereto, whereby the manufacture of the glass panel is completed.

Incidentally, in order to assure reliable blocking of the communication between the vent 4 and the gap V, when the content of the metal solder piece 6A is caused to flow into the gap V to charge it with the metal solder 6, it is desired for effectiveness that the metal solder 6 should be charged uniformly about the exit of the vent 4 on the side of the gap V. In order to achieve such desirable charged condition, attention should be paid to the following respects
<1> In the area of at least the space of the gap V to be charged with the metal solder 6, it should be arranged that the metal solder 6 tend to flow with substantially rotational symmetric relationship relative to the virtual center line of the vent 4. As specific methods for realizing this, the following methods may be cited. Namely, the glass panel should be set such that the sheet faces of the glass sheets 1A, 1B be maintained substantially horizontal. The vent 4 should be formed with high precision such that the axis thereof extend normal to the sheet faces of the glass sheets 1A, 1B. Also, the area to be charged with the metal solder 6 should be free from any object such as the spacer 5 which may interfere with free flow of the metal solder 6.
   If this condition is met, then, the molten metal solder piece 6A introduced into the gap V will flow into the gap V substantially coaxially from the exit of the vent 4 on the side of the gap V, so that it is readily possible to charge the metal solder 6 uniformly around the exit of the vent 4 on the side of the gap V.
<2> The amount of the metal solder 6 should be adjusted so that the amount of the molten metal solder piece 6A flowing into the gap V may be appropriate.
   For instance, when it is desired to charge the metal solder 6 by a diameter of about 6 mm around the vent 4 of a diameter of 2 mm, the volume of the metal solder 6 used should be adjusted to correspond to the sum of the volume of the metal solder 6 required for charging the gap V with such diameter, the volume of the metal solder 6 required for filling the vent 4 and the volume of the metal solder 6 required for charging the inside of the cover member 8 on the surface of the glass sheet 1A of the vent 4.
<3> The temperature and the time period after the metal solder piece 6A begins to flow before it solidifies should be controlled appropriately.

That is, with the above item <1>, the molten metal solder piece 6A flowing into the gap V via the vent 4 will flow out substantially coaxially from the exit of the vent 4 on the side of the gap V into the gap V. However, the speed of this outflow varies according to the temperature and the diameter of the vent 4. Also, after its has flown into the gap V to some extent, the speed will begin to decrease to reach a predetermined saturation point.

Therefore, since the diameter of the vent 4 is set to a predetermined value in advance, by maintaining the temperature and the time period constant after the metal solder piece 6A begins to flow out and before it solidifies, it is possible to render substantially constant the amount of the metal solder piece 6A flowing into the gap V. Further, by setting the temperature constant and also setting the time period until the solidification of the metal solder piece 6A to be same as the time period until its outflow speed substantially reaches the saturation point thereof, the metal solder 6 may be charged into the gap V stably and appropriately.

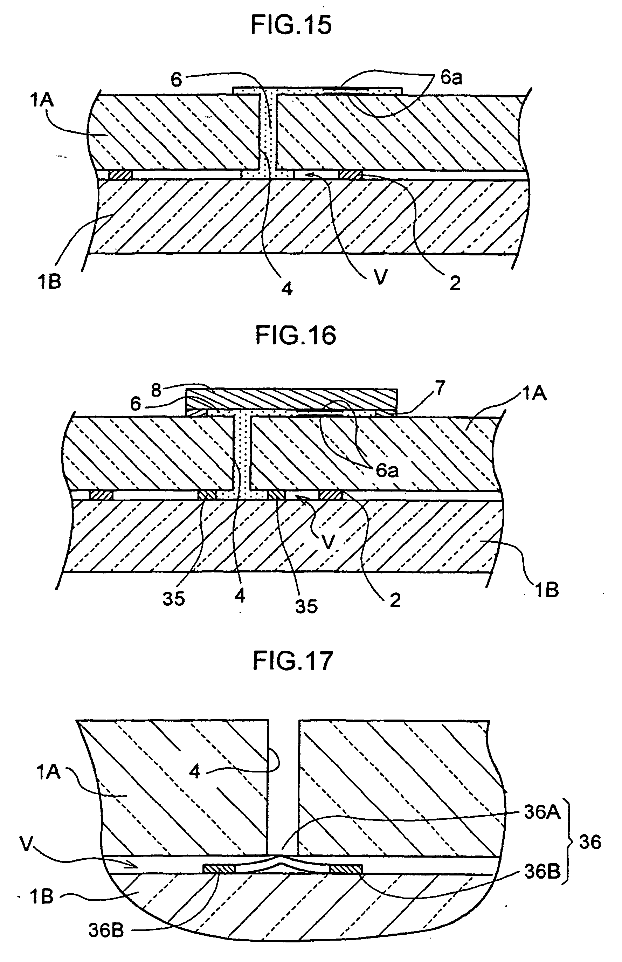

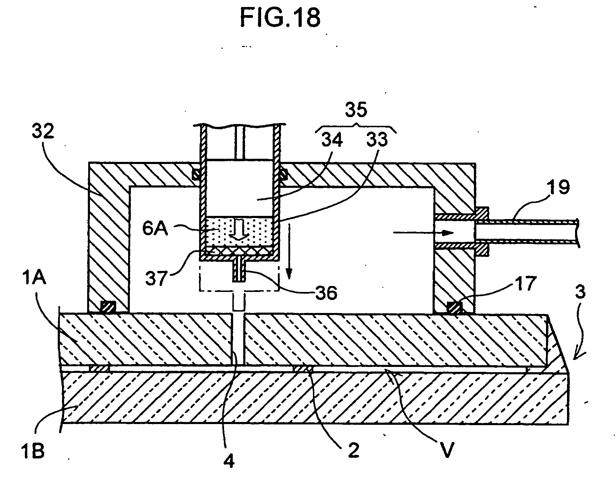

Next, other embodiments closely relating to the second embodiment will be described.
<2-1> In the foregoing second embodiment, there is provided a glass panel in which the guide plate 7 is affixed to the periphery of the vent 4 sealed with the metal solder 6 and the cover member 8 is provided for covering this guide plate 7 and the metal solder 6. However, if the guide plate 7 and the cover member 8 are removed after the outflow and subsequent solidification of the metal solder 6, there may be obtained a glass panel without the guide plate 7 or the cover member 8, as shown in Fig. 15. In this case, it is preferred that the guide plate 7 and the cover member 8 be formed of a material, such as aluminum, which hardly adheres to the metal solder 6. Further, as the metal solder 6 or the vent 4 is exposed to the outside, it should be protected by a water-proof coating applied thereto or a cap affixed thereto.
<2-2> In the foregoing second embodiment, the metal solder 6 is charged uniformly, by taking the above-described items <1> through <3> into consideration. However, the invention is not limited to such embodiment. Alternatively, as shown in Fig. 16, by disposing a checking member 35 at an appropriate position in the vicinity of the exit of the vent 4 on the side of the gap V so as to positively check the flow of the molten metal solder piece 6A introduced into the gap V, the metal solder 6 may be charged uniformly inside the gap V. Next, this embodiment will be described in greater details.
   Namely, for forming the checking member 35, a material which has relatively poor affinity relative to the molten metal solder, i.e. a material having poor wettability relative thereto, is suitable. For example, a stainless steel plate may be employed. If the gap V has a layer thickness of 0.2 mm and the vent 4 has a hole diameter of 2 mm, the checking member 35 may be a ring-shaped member having an inner diameter of 6 mm, an outer diameter of 10mm and a thickness of 0.1 mm. In this manner, in order to secure space for degassing during the depressurizing operation of the inside of the gap V, the thickness of the checking member 35 is set to be slightly smaller than the layer thickness of the gap V. Incidentally, even if such space exists, because of the poor wettability between the molten metal solder and the checking member 35, there is substantially no possibility of the molten metal solder flowing over the checking member 35 into the gap V.
   Further, if the checking member 35 has gas permeability inherently therein, this will further reduce the resistance experienced by the gas to be removed from the gap in the course of the depressurizing operation of this gap V. Hence, the degassing operation may be carried out even more easily. For example, if the checking member 5 is formed of a stainless steel mesh plate having gas permeability, the degassing resistance will be reduced and also such plate can be profiled more easily than e.g. a stainless plate. In this case, the member may be formed by forming a stainless wire having a wire diameter of 0.05 mm into a 200 mesh plain weave, which provides an opening of 0.077 mm and an opening area percentage of 36.8%.
   Incidentally, in disposing the checking member at the gap, a projection may be formed in advance at a portion of the checking member. Such checking member will come into contact with the sheet faces of the glass sheets inside the gap V, so that the checking member will be hardly displaced when the glass panel is inclined or the gap is being depressurized, whereby the metal solder may be charged more reliably to the target position.
   An example of the checking member having the displacement restricting means described above is shown in Fig. 17. The checking member 36 shown in Fig. 17 is formed by folding the ring-shaped checking member 36 into two to provide a projecting portion 36A so that the member has a portion thereof having a substantially horizontally oriented hooked-shaped cross section. When this checking member 36 is disposed within the gap V in a posture shown in the conceptual diagram of Fig. 17, a bottom side 36B of the checking member 36 comes into contact with the sheet face of the lower glass sheet 1B and the projecting portion 36A, by the elasticity thereof, will tend to contact the sheet face of the upper glass sheet 1A at a position facing the vent 4. Therefore, the checking member 36 may be fixed in position at the appropriate position.
<2-3> In the foregoing embodiments, in case the surfaces of the glass sheets 1A, 1B on the side of the gap V are flat, the molten metal solder 6 and the glass sheets 1A, 1B may contact substantially gaplessly, even on a microscopic scale, thereby to provide highly sealed condition to maintain the depressurized condition at the gap V for an extended period of time.
   However, if microscopic unevenness is present originally on the surfaces of the glass sheets 1A, 1B on the side of the gap V (for example, when the glass sheets 1A, 1B are frosted glass sheets or "Low-E" glass sheets having surface coating), there may arise the problem that noncontact portions may be formed at the contacting areas between the molten metal solder 6 and the glass sheets 1A,1B, whereby highly sealed condition at the gap V can not be maintained. Therefore, it is preferred that the portions of the sheet faces of the glass sheets 1A, 1B on the side of the gap V to be brought into direct contact with the metal solder 6 should be treated in advance into smooth surfaces without microscopic unevenness to an extent not to cause such problem. This treatment can be effected easily by a polishing process as follows.
   First, sanding is done with rough-mesh (e.g. No. 150, etc.) sand Subsequent sanding is done with gradually replacing the sand by fine-mesh (e.g. No. 400, etc) sand. With this, the efficiency of the polishing process may be improved.
   When the sanding process is completed with sand of certain mesh. Next, by using a finishing polishing agent (e.g. fine powder of ceric oxide), polishing is effected. With the above-described sanding process using sands, microscopic unevenness will remain, even when the process is finished with sand of considerably fine mesh (e.g. No. 1000). However, with the polishing process, the surfaces may be finished into smooth faces enough to maintain the depressurized condition of the gap V for an extended period of time.
<2-4> The sealing device for sealing the vent 4 with the metal solder 6 too is not limited to those described in the foregoing embodiments. For instance, a device having the following construction may be used.
   For example, the sealing device shown in Fig. 18 includes a gas-tight box-like member 32 having a flexible pipe 19 for evacuating gas from the gap V and an O-ring 17 for providing sealing relative to the glass sheet 1A. Inside the box-like member 32, there is mounted an injector 35 consisting of a cylinder 33 and a slider 34 slidably mounted inside the cylinder 33. The cylinder 33 of the injector 35 is communicated with an injecting hole 36. Further, the cylinder 33 incorporates therein a filter 37. And, the injector 35 is vertically slidable relative to the box-like member 32 with maintaining the sealed condition relative to the box-like member 32.
   This sealing process may be carried out in a manner as follows. First, the box-like member 32 is set so that the injecting hole 36 of the injector 35 is located above the vent 4. Then, the metal solder piece 6A is inserted into the cylinder 33 and the injector 35 is heated e.g. from the outside so as to melt the metal solder piece 6A inside the cylinder 33. And, the injector 24 is slid down to bring the injecting hole 36 into face-to-face relationship with the vent 4 (or insert it into the vent).
   Thereafter, by sliding the slider 34 downward, the molten metal solder 6 is injected from the injecting hole 36 through the vent 4 into the gap V. In the course of this, the oxide skin 6a mixed in the molten metal solder 6 will be blocked by the filter 37, so that the oxide skin 6a is prevented from flowing into the injecting hole 25 and only the content of the metal solder piece 6A will be injected through the vent 4 into the gap V.
   Thereafter, like the sealing device of the foregoing embodiments, by setting an appropriate cooling period, the molten metal solder piece 6A will be solidified, so that the communication between the vent 4 and the gap V will be blocked by the metal solder 6, whereby the sealing of the vent 4 is completed.
<2-5> In each of the foregoing embodiments, there was described a method of manufacturing a glass panel in which the vent 4 is sealed after the evacuation operation of simply removing the gas from the gap V to render it into a depressurized condition. And, there was also described a glass panel manufactured by such method. However, the method of manufacturing a glass panel and the glass panel manufactured by the method according to the present invention are not limited to such embodiments. For instance, needless to say, the invention may be embodied as a method and a glass panel in which other gas than air (e.g. noble gas) is newly charged into the gap after the degassing of this gap V via the vent 4 and then the vent 4 is sealed so as to maintain this gap under a gas-charged depressurized condition (e.g. a plasma display panel).
<2-6> The glass sheets employed in the glass panel of the invention are not limited those illustrated in the foregoing embodiments in which one glass sheet and the other glass sheet are different in the length or width thereof. The glass sheets used may be of same dimensions as well.
   Further, as for the composition of the glass, it may also be soda lime silica glass, borosilicate glass, aluminosilicate glass, various kinds of crystallized glass.
   And, in the glass panel relating to the present invention, the outer peripheries of the glass sheets may be sealed with a metal solder, as a sealing material, including indium, lead, tin or zinc, etc. as its main components.

### Industrial Applicability

The glass panel of the present invention may find its applications iv various fields such as the field of building construction, vehicles (window shield of automobile, railway train or of a boat), various instruments (display panel of a plasma display device, a door or wall of a refrigerator or heat-insulating device), etc.

## Claims

1. A method of manufacturing a glass panel, the method comprising the steps of: disposing a number of spacers (2) between a pair of glass sheets (1A, 1B); sealing outer peripheries of the glass sheets (1A, 1B) with an outer periphery sealing portion (3) to form a gap (V) between the glass sheets (1A, 1B); forming a vent (4) in one (1A) of the glass sheets (1A, 1B) for evacuating gas from the gap (V); evacuating the gas in the gap (V) via the vent (4) to depressurize the gap (V); and then sealing the vent (4);
wherein at the sealing step of sealing the vent (4), a metal solder (6) is employed as a sealing material, a piece (6A) of the metal solder is heated and molten adjacent the vent (4) to break open an oxide skin (6a) on the surface of the metal solder (6), so that the metal solder (6) therein is allowed to flow out through the broken oxide skin to come into contact directly with the one glass sheet (1A), whereby the metal solder (6) is cooled and solidified by the contact, thus sealing the vent (4).

2. The method of manufacturing a glass panel according to claim 1, wherein an inflow preventing member (5) is provided at a longitudinal intermediate portion of the vent (4) for preventing the flown-out metal solder (6) from flowing into the gap (V).

3. The method of manufacturing a glass panel according to claim 2, wherein the inflow preventing member (5) includes a getter (5a) for adsorbing the gas in the gap (V).

4. The method of manufacturing a glass panel according to any one of claims 1-3, wherein an annular restricting member (7) for restricting outflow of the metal solder (6) is provided so as to surround the vent (4) and the metal solder piece (6A), and the metal solder (6) is allowed to flow out through the oxide skin (6a) on the surface of the molten metal solder piece (6A) while the restricting member (7) is maintained in contact with the surface of the one glass sheet (1A).

5. The method of manufacturing a glass panel according to any one of claims 1-4, wherein the metal solder (6) comprises indium or an alloy including indium.

6. A glass panel including of pair of glass sheets (1A, 1B) disposed with a number of spacers (2) therebetween, outer peripheries of the glass sheets (1A, 1B) being sealed with an outer periphery sealing portion (3) to form a gap (V) between the glass sheets (1A, 1B), a vent (4) being formed in one (1A) of the glass sheets (1A, 1B) for evacuating gas from the gap (V) to depressurize the gap (V) and then being sealed;
wherein the vent (4) is sealed by the metal solder (6) by introducing the metal solder (6) under its molten state into the vent (4) to break open an oxide skin (6a) on the surface of a piece (6A) of the metal solder (6) to come into direct contact with the one glass sheet (1A).

7. The glass panel according to claim 6, wherein an inflow preventing member (5) is provided at a longitudinal intermediate portion of the vent (4) for preventing the flown-out metal solder (6) from flowing into the gap (V), with the metal solder (6) being introduced up to the inflow preventing member (5).

8. The glass panel according to claim 7, wherein the inflow preventing member (5) includes a getter (5a) for adsorbing the gas in the gap (V).

9. The glass panel according to any one of claims 6-8, wherein the metal solder (6) comprises indium or an alloy including indium.

10. A method of manufacturing a glass panel, the method comprising the steps of: disposing a number of spacers (2) between a pair of glass sheets (1A, 1B); sealing outer peripheries of the glass sheets (1A, 1B) with an outer periphery sealing portion (3) to form a gap (V) between the glass sheets (1A, 1B); forming a vent (4) in one (1A) of the glass sheets (1A, 1B) for evacuating gas from the gap (V); evacuating the gas in the gap (V) via the vent (4) to depressurize the gap (V); and then sealing the vent (4);
wherein at the sealing step of sealing the vent (4), a metal solder (6) is employed as a sealing material, a piece (6A) of the metal solder is heated and molten adjacent the vent (4) to break open an oxide skin (6a) on the surface of the metal solder (6), so that the metal solder (6) therein is allowed to flow out through the broken skin into the gap (V) to come into contact directly with a portion of the surface of the one glass sheet (1A) defining the vent (4) on the side of the gap (V), the portion being around the vent (4), and also with a portion of the surface of the other glass sheet (1B) on the side of the gap (V), whereby the metal solder (6) is cooled and solidified by the contact to block communication between the vent (4) and the gap (V), the portion being in the vicinity of the vent (4), thus sealing the vent (4).

11. The method of manufacturing a glass panel according to claim 10, wherein the portions of the glass sheets (1A, 1B) on the side of the gap (V) coming into direct contact with the metal solder (6) are formed in advance into smooth faces.

12. The method of manufacturing a glass panel according to claim 10 or 11, wherein the metal solder (6) comprises indium or an alloy including indium.

13. A glass panel including a pair of glass sheets (1A, 1B) disposed with a number of spacers (2) therebetween, outer peripheries of the glass sheets (1A, 1B) being sealed with an outer periphery sealing portion (3) to form a gap (V) between the glass sheets (1A, 1B), a vent (4) being formed in one (1A) of the glass sheets (1A, 1B) for evacuating gas from the gap (V) to depressurize the gap (V) and then being sealed;
wherein a metal solder (6) is charged within the gap (V) in such a manner as to come into direct contact with a portion of the surface of the one glass sheet (1A) defining the vent (4) on the side of the gap (V), the portion being around the vent (4). and also with a portion of the surface of the other glass sheet (1B) on the side of the gap (V), the portion being in the vicinity the vent (4), thereby to block communication between the vent (4) and the gap (V), thus sealing the vent (4).

14. The glass panel according to claim 13, wherein the metal solder (6) comprises indium or an alloy including indium.

## Patentansprüche

1. Verfahren zum Herstellen einer Glasplatte, wobei das Verfahren folgende Schritte aufweist: Anordnen einer Anzahl von Abstandsstücken (2) zwischen einem Paar Glasscheiben (1A, 1B); Abdichten äußerer Ränder der Glasscheiben (1A, 1B) mit einem Außenrandabdichtungsteil (3) zum Erzeugen eines Zwischenraums (V) zwischen den Glasscheiben (1A, 1B); Ausbilden einer Entlüftungsöffnung (4) in einer der Glasscheiben (1A, 1B) zum Evakuieren von Gas aus dem Zwischenraum (V); Evakuieren des Gases im Zwischenraum (V) über die Entlüftungsöffnung (4) zum Auslassen des Drucks aus dem Zwischenraum (V); und anschließendes Verschließen der Entlüftungsöffnung (4);
wobei im Verschließungsschritt zum Verschließen der Entlüftungsöffnung (4) ein Metalllot (6) als Verschlussmaterial verwendet wird, ein Stück (6A) des Metalllots in der Nähe der Entlüftungsöffnung (4) erwärmt und geschmolzen wird, um eine Oxidhaut (6a) auf der Oberfläche des Metalllots (6) aufzubrechen, so dass das Metalllot (6) darin durch die aufgebrochene Oxidhaut herausfließen kann, um direkt mit der einen Glasscheibe (1A) in Kontakt zu kommen, wodurch das Metalllot (6) durch den Kontakt abkühlt und sich verfestigt, wodurch die Entlüftungsöffnung (4) verschlossen wird.

2. Verfahren zum Herstellen einer Glasplatte nach Anspruch 1, bei dem ein Einlaufverhinderungselement (5) an einem Längszwischenstück der Entlüftungsöffnung (4) vorgesehen ist, um das ausgeflossene Metalllot (6) daran zu hindern, in den Zwischenraum (V) zu fließen.

3. Verfahren zum Herstellen einer Glasplatte nach Anspruch 2, bei dem das Einlaufverhinderungselement (5) einen Fangstoff (5a) zur Adsorption des Gases im Zwischenraum (V) aufweist.

4. Verfahren zum Herstellen einer Glasplatte nach einem der Ansprüche 1 - 3, bei dem ein ringförmiges Eindämmelement (7) zum Eindämmen des Ausflusses des Metalllots (6) vorgesehen ist, um so die Entlüftungsöffnung (4) und das Metalllotstück (6A) zu umgeben, und das Metalllot (6) durch die Oxidhaut (6a) auf der Oberfläche des geschmolzenen Metalllotstücks (6A) fließen kann, während das Eindämmelement (7) mit der Oberfläche der einen Glasscheibe (1A) in Kontakt bleibt.

5. Verfahren zum Herstellen einer Glasplatte nach einem der Ansprüche 1 - 4, bei dem das Metalllot (6) Indium oder eine Indium enthaltende Legierung umfasst.

6. Glasplatte, mit einem Paar Glasscheiben (1A, 1B), die mit einer Anzahl Abstandsstücken (2) zwischen ihnen angeordnet sind, wobei Außenränder der Glasscheiben (1A, 1B) mit einem Außenrandabdichtungsstück (3) zum Ausbilden eines Zwischenraums (V) zwischen den Glasscheiben (1A, 1B) abgedichtet sind, wobei eine Entlüftungsöffnung (4) in einer (1A) der Glasscheiben (1A, 1B) zum Evakuieren von Gas aus dem Zwischenraum (V) zum Auslassen von Druck aus dem Zwischenraum (V) ausgebildet ist und anschließend verschlossen wird;
wobei die Entlüftungsöffnung (4) durch das Metalllot (6) verschlossen wird, indem das Metalllot (6) in geschmolzenem Zustand in die Entlüftungsöffnung (4) eingebracht wird, um eine Oxidhaut (6a) auf der Oberfläche eines Stücks (6A) des Metalllots (6) aufzubrechen, um mit der einen Glasscheibe (1A) in direkten Kontakt zu kommen.

7. Glasplatte nach Anspruch 6, bei der ein Einlaufverhinderungselement (5) an einem Längszwischenteil der Entlüftungsöffnung (4) vorgesehen ist, um das ausgeflossene Metalllot (6) daran zu hindern, in den Zwischenraum (V) zu fließen, wobei das Metalllot (6) bis zum Einlaufverhinderungselement (5) eingebracht wird.

8. Glasplatte nach Anspruch 7, bei der das Einlaufverhinderungselement (5) einen Fangstoff (5a) zur Adsorption des Gases im Zwischenraum (V) aufweist.

9. Glasplatte nach einem der Ansprüche 6 - 8, bei der das Metalllot (6) Indium oder eine Indium enthaltende Legierung umfasst.

10. Verfahren zum Herstellen einer Glasplatte, wobei das Verfahren folgende Schritte aufweist: Anordnen einer Anzahl von Abstandsstücken (2) zwischen einem Paar Glasscheiben (1A, 1B); Abdichten äußerer Ränder der Glasscheiben (1A, 1B) mit einem Außenrandabdichtungsteil (3) zum Erzeugen eines Zwischenraums (V) zwischen den Glasscheiben (1A, 1B); Ausbilden einer Entlüftungsöffnung (4) in einer (1A) der Glasscheiben (1A, 1B) zum Evakuieren von Gas aus dem Zwischenraum (V); Evakuieren des Gases im Zwischenraum (V) über die Entlüftungsöffnung (4) zum Auslassen des Drucks aus dem Zwischenraum (V); und anschließendes Verschließen der Entlüftungsöffnung (4);
wobei im Verschließungsschritt zum Verschließen der Entlüftungsöffnung (4) ein Metalllot (6) als Verschlussmaterial verwendet wird, ein Stück (6A) des Metalllots in der Nähe der Entlüftungsöffnung (4) erwärmt und geschmolzen wird, um eine Oxidhaut (6a) auf der Oberfläche des Metalllots (6) aufzubrechen, so dass das Metalllot (6) darin durch die aufgebrochene Oxidhaut heraus und in den Zwischenraum (V) fließen kann, um auf der Seite des Zwischenraums (V) direkt mit einem Teil der Oberfläche der einen Glasscheibe (1A), welche die Entlüftungsöffnung (4) definiert, wobei der Teil um die Entlüftungsöffnung (4) herum ist, und auch mit einem Teil der Oberfläche der anderen Glasscheibe (1 B) auf der Seite des Zwischenraums (V) in Kontakt zu kommen, wodurch das Metalllot (6) durch den Kontakt abkühlt und sich verfestigt, um eine Kommunikation zwischen der Entlüftungsöffnung (4) und dem Zwischenraum (V) zu blockieren, wobei der Teil in der Nähe der Entlüftungsöffnung (4) ist, wodurch die Entlüftungsöffnung (4) verschlossen wird.

11. Verfahren zum Herstellen einer Glasplatte nach Anspruch 10, bei dem die Teile der Glasscheiben (1A, 1B) auf der Seite des Zwischenraums (V), die mit dem Metalllot (6) in direkten Kontakt kommen, im Voraus in glatte Flächen geformt werden.

12. Verfahren zum Herstellen einer Glasscheibe nach Anspruch 10 oder 11, bei dem das Metalllot (6) Indium oder eine Indium enthaltende Legierung umfasst.

13. Glasplatte, mit einem Paar Glasscheiben (1A, 1B), die mit einer Anzahl Abstandsstücken (2) zwischen ihnen angeordnet sind, wobei Außenränder der Glasscheiben (1A, 1B) mit einem Außenrandabdichtungsstück (3) zum Ausbilden eines Zwischenraums (V) zwischen den Glasscheiben (1A, 1B) abgedichtet sind, wobei eine Entlüftungsöffnung (4) in einer (1A) der Glasscheiben (1A, 1B) zum Evakuieren von Gas aus dem Zwischenraum (V) zum Auslassen von Druck aus dem Zwischenraum (V) ausgebildet ist und dann verschlossen wird;
wobei ein Metalllot (6) derart in den Zwischenraum (V) eingebracht wird, dass es auf der Seite des Zwischenraums (V) mit einem Teil der Oberfläche der einen Glasscheibe (1A), welche die Entlüftungsöffnung (4) definiert, wobei der Teil um die Entlüftungsöffnung (4) herum ist, und auch mit einem Teil der Oberfläche der anderen Glasscheibe (1B) auf der Seite des Zwischenraums (V) in direkten Kontakt kommt, wobei der Teil in der Nähe der Entlüftungsöffnung (4) ist, wodurch eine Kommunikation zwischen der Entlüftungsöffnung (4) und dem Zwischenraum (V) blockiert wird, wodurch die Entlüftungsöffnung (4) verschlossen wird.

14. Glasplatte nach Anspruch 13, wobei das Metalllot (6) Indium oder eine Indium enthaltende Legierung umfasst.

## Revendications

1. Un procédé de fabrication d'un panneau en verre, le procédé comprenant les étapes consistant à : disposer une pluralité d'éléments d'espacement (2) entre une paire de feuilles de verre (1A, 1B); fermer hermétiquement les périphéries extérieures des feuilles de verre (1A, 1B) avec une partie d'étanchéité de périphérie extérieure (3), pour former un intervalle ou écartement (V) entre les feuilles de verre (1A, 1B); former un évent (4) dans l'une (1A) des feuilles de verre (1A, 1B) pour évacuer du gaz de l'intervalle (V); évacuer le gaz dans l'intervalle (V) via l'évent (4), pour dépressuriser l'intervalle (V); puis fermer hermétiquement l'évent (4);
dans lequel, à l'étape de fermeture hermétique étanche de l'évent (4), une brasure ou soudure métallique (6) est utilisée comme matériau d'étanchéité, un élément (6A) de brasure ou soudure métallique est chauffé et fondu en une position adjacente à l'évent (4) pour ouvrir, en la fracturant, une peau d'oxyde (6a) se trouvant sur la surface de la brasure métallique (6), de manière que la brasure métallique (6) s'y trouvant puisse s'échapper en passant à travers la peau d'oxyde rompue, pour venir en contact directement avec la feuille de verre (1A), de manière que la brasure métallique (6) soit refroidie et solidifiée par le contact, fermant ainsi hermétiquement l'évent (4).

2. Procédé de production d'un panneau en verre selon la revendication 1, dans lequel un élément d'empêchement d'entrée d'écoulement (5) est prévu en une partie longitudinale intermédiaire de l'évent (4), pour empêcher que de la brasure métallique (6), s'étant échappée, pénètre dans l'intervalle (V).

3. Procédé de production d'un panneau en verre selon la revendication 2, dans lequel l'élément d'empêchement d'entrée d'écoulement (5) comprend un fixateur de gaz ou dégazeur (5a), pour adsorber le gaz se trouvant dans l'intervalle (V).

4. Procédé de production d'un panneau en verre selon l'une quelconque des revendications 1 à 3, dans lequel un élément de restriction annulaire (7), conçu pour restreindre l'écoulement sortant de brasure métallique (6), est prévu afin d'entourer l'évent (4) et l'élément de brasure métallique (6A), et la brasure métallique (6) est laissée s'échapper à travers la peau d'oxyde (6A) se trouvant sur la surface de l'élément de brasure métallique fondu (6A), tandis que l'élément de restriction (7) est maintenu en contact avec la surface de la feuille en verre (1A).

5. Procédé de production d'un panneau en verre selon l'une quelconque des revendications 1 à 4, dans lequel la brasure métallique (6) comprend de l'indium ou d'un alliage contenant de l'indium.

6. Un panneau en verre comprenant une paire de feuilles de verre (1A, 1B), disposées avec une pluralité d'éléments d'espacement (2) interposés entre elles, les périphéries extérieures des feuilles de verre (1A, 1B) étant fermées hermétiquement avec une partie d'étanchéité de périphérie extérieure (3), pour former un intervalle ou écartement (V) entre les feuilles de verre (1A, 1B), un évent (4) étant formé dans l'une (1A) des feuilles de verre (1A, 1B) pour évacuer le gaz de l'intervalle (V), pour dépressuriser l'intervalle (V), puis être fermé hermétiquement;
dans lequel l'évent (4) est fermé hermétiquement par la brasure métallique (6), par introduction de la brasure métallique (6) à son état fondu dans l'évent (4) pour ouvrir, en la fracturant, une peau d'oxyde (6a) se trouvant sur la surface d'une pièce (6A) de la brasure métallique (6), afin de venir en contact direct avec la feuille en verre (1A).

7. Panneau en verre selon la revendication 6, dans lequel un élément d'empêchement d'entrée d'écoulement (5) est prévu sur une partie longitudinale intermédiaire de l'évent (4), pour empêcher que la brasure métallique (6) s'étant échappée pénètre dans l'intervalle (V), la brasure métallique (6) étant introduite jusqu'à l'élément d'empêchement d'entrée d'écoulement (5).

8. Panneau en verre selon la revendication 7, dans lequel l'élément d'empêchement d'entrée d'écoulement (5) comprend un fixateur de gaz ou dégazeur (5a) pour adsorber le gaz se trouvant dans l'intervalle (V).

9. Panneau en verre selon l'une quelconque des revendications 6 à 8, dans lequel la brasure métallique (6) comprend de l'indium ou un alliage comprenant de l'indium.

10. Un procédé de production d'un panneau en verre, le procédé comprenant les étapes consistant à : disposer une pluralité d'éléments d'espacement (2) entre une paire de feuilles de verre (1A, 1B); fermer hermétiquement les périphéries extérieures des feuilles de verre (1A, 1B), avec une partie d'étanchéité de périphérie extérieure (3) pour former un intervalle ou écartement (V) entre les feuilles de verre (1A, 1B); former un évent (4) dans l'une (1A) des feuilles de verre (1A, 1B) pour évacuer du gaz de l'intervalle (V); évacuer le gaz dans l'intervalle (V) via l'évent (4), pour dépressuriser l'intervalle (V); puis fermer hermétiquement l'évent (4);
dans lequel, à l'étape de fermeture étanche de l'évent (4), une brasure ou soudure métallique (6) est utilisée comme matériau d'étanchéité, un élément (6A) de la brasure ou soudure métallique est chauffé et fondu en une position adjacente à l'évent (4) pour ouvrir par rupture une peau d'oxyde (6a) présente à la surface de la brasure métallique (6), de manière que la brasure métallique (6) s'y trouvant puisse s'échapper, en traversant la peau rompue, dans l'intervalle (V), pour venir en contact directement avec une partie de la surface d'une feuille de verre (1A), définissant l'évent (4), sur le côté de l'intervalle (V), la partie se trouvant autour de l'évent (4), et également avec une partie de la surface de l'autre feuille de verre (1B) sur le côté de l'intervalle (V), de manière que la brasure métallique (6) soit refroidie et solidifiée par le contact afin de bloquer la communication entre l'évent (4) et l'intervalle (V), la partie étant située à proximité de l'évent (4) fermant ainsi hermétiquement l'évent (4).

11. Procédé de production d'un panneau en verre selon la revendication 10, dans lequel les parties de feuilles de verre (1A, 1B), situées du côté de l'intervalle (V), venant en contact direct avec la brasure métallique (6), sont formées préalablement en surfaces lisses.

12. Procédé de production d'un panneau en verre selon la revendication 10 ou 11, dans lequel la brasure métallique (6) comprend de l'indium ou un alliage contenant de l'indium.

13. Un panneau en verre comprenant une paire de feuilles de verre (1A, 1B) disposées avec une pluralité d'éléments d'espacement (2) interposés entre elles, les périphéries extérieures des feuilles de verre (1A, 1B) étant fermées hermétiquement avec une partie d'étanchéité de périphérie extérieure (3) pour former un intervalle (V) entre les feuilles de verre (1A, 1B), un évent (4) étant formé dans l'une (1A) des feuilles de verre (1A, 1B) pour évacuer le gaz de l'intervalle (V), afin de dépressuriser l'intervalle (V), puis être fermé hermétiquement;
dans lequel une brasure métallique (6) est chargée à l'intérieur de l'intervalle (V), de manière à venir en contact direct avec une partie de la surface d'une feuille en verre (1A) définissant l'évent (4) sur le côté de l'intervalle (V), la partie située autour de l'évent (4), et également avec une partie de la surface de l'autre feuille de verre (1B), sur le côté de l'intervalle (V), la partie étant située à proximité de l'évent (4), de manière à bloquer la communication entre l'évent (4) et l'intervalle (V), fermant ainsi hermétiquement l'évent (4).

14. Le panneau en verre selon la revendication 13, dans lequel la brasure métallique (6) comprend de l'indium ou un alliage contenant de l'indium.
